(19) Europäisches Patentamt
European Patent Office
Office européen des brevets

(11) **EP 2 822 163 A1**

(12) **EUROPEAN PATENT APPLICATION**

(43) Date of publication:
**07.01.2015 Bulletin 2015/02**

(51) Int Cl.:
*H02M 1/00* (2007.01)  *H02M 7/42* (2006.01)
*H02P 9/00* (2006.01)  *H02P 9/02* (2006.01)
*H02J 3/38* (2006.01)

(21) Application number: **13174860.0**

(22) Date of filing: **03.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Kabushiki Kaisha Toshiba
Tokyo 105-8001 (JP)**

(72) Inventors:
• **Kimura, Misao
Tokyo (JP)**
• **Noro, Yasuhiro
Tokyo (JP)**

• **Hayashi, Hideki
Tokyo (JP)**
• **Hasegawa, Yoshiaki
Tokyo (JP)**
• **Ebata, Yoshio
Tokyo (JP)**

(74) Representative: **Hoffmann Eitle
Patent- und Rechtsanwälte PartmbB
Arabellastraße 30
81925 München (DE)**

Remarks:
Amended claims in accordance with Rule 137(2) EPC.

(54) **Power supply system**

(57)     A power supply system comprises: a second electric power converter (2B) that converts power discharged by electric power storage means (4) to AC power and that converts charging power to the electric power storage means (4) to DC power; a second current detector (6B) that detects the current that is output from the second electric power converter (2B);
an electric characteristic computation section (13) that calculates the output current $I_{Gref}$ and the electrical output torque Te of a virtual power generator, based on the voltage $V_T$, angular frequency $\omega$ and voltage set value $V_{ref}$ of a first electric power converter (2A) and the second electric power converter (2B), and their connection point (point a) with the power system (1); a rotor speed computation section (10) that calculates the angular frequency $\omega$, based on the electrical output torque Te and an output target value $P_{ref}$ for active power; and a second power conversion controller (14B) that controls the second electric power converter (2B) in accordance with the difference of the current $I_G$ that is output from the first electric power converter (2A) and the output current $I_{Gref}$.

FIG.1

**Description**

**FIELD**

Embodiments described herein relate to a power supply system.

**BACKGROUND**

In recent years, studies have been made aimed at reduction of the amount of carbon-dioxide emission (or carbon footprint) of power supply systems by installing power generation equipment utilizing renewable energy which does not generate greenhouse gases during power generation. However, in the case of power generation utilizing renewable energy, control of the amount of power supplied is more difficult than in a power generation system using for example thermal power generation, so achievement of stable power supply is desired.

For example, stable power supply is more difficult in the case of solar power generation than in a conventional power generation system using for example thermal power because of long-period fluctuations and short-period fluctuations in the amount of solar radiation. As methods of solving this problem, there has been proposed a power supply system in which the active power that is output from the system is controlled to a fixed value, by employing a combination of power generation equipment using renewable energy with a power storage device, exemplified by a storage battery, or a method in which short-period fluctuations of output of the power generation equipment are suppressed by utilizing renewable energy. As technology that is related to the foregoing, there may be mentioned Laid-open Japanese Patent Application Number Tokkai 2007-318833 (hereinafter referred to as Patent Reference 1).

In the case of a synchronous power generator, such as a thermal power generator, a contribution to stability of the system frequency is obtained due to the fact that, when the system frequency fluctuates, there is a latent action tending to suppress such fluctuation; furthermore, a governor is provided, so that, when the system frequency fluctuates, the amount of power generated is adjusted so as to suppress such fluctuation. In contrast, in the case of a power supply system in which power generation equipment utilizing renewable energy is combined with a power storage device, such a frequency regulation action as described above that occurs in the case of a synchronous power generator when the system frequency fluctuates is absent:

consequently, when a large amount of power is introduced into the system, difficulty in stabilizing the system frequency may be anticipated.

This embodiment of the present invention was made in order to solve the problem described above, its object being to provide a power supply system that is easy to manage from the point of view of monitoring and control of the power system as a whole.

[Means for solving the problem]

According to the embodiment, there is provided a power supply system comprising:

electric power storage means;
a second electric power converter that converts power discharged by said electric power storage means to AC power and that converts charging power to said electric power storage means to DC power;
a second current detector that detects the current that is output from said second electric power converter;
a first electric power converter that converts DC power to AC power and supplies said AC power;
an electric characteristic computation section that calculates an output current and an electrical output torque of a virtual power generator, based on a voltage of a connection point between said power conversion and the power system, an angular frequency and a voltage set value;
a rotor speed computation section that calculates said angular frequency of said virtual power generator, based on said electrical output torque of said virtual power generator calculated by said electrical characteristic computation section and an output target value for active power; and
a second power conversion controller that controls said second electric power converter in accordance with the difference betwen the current that is output to the power system from said first electric power converter and the output current of said virtual power generator.

**BRIEF DESCRIPTION OF THE DRAWINGS**

FIG.1 is a block diagram showing an example layout of a power supply system according to a first embodiment;
FIG.2 is a view showing an example layout of a second power conversion controller as shown in FIG. 1;
FIG.3 is a view showing an example layout of a mechanical output computation section as shown in FIG. 1;
FIG.4 is a view showing an example layout of a rotor speed computation section as shown in FIG. 1;
FIG. 5 is a view showing an example layout of a field voltage computation section as shown in FIG. 1;
FIG.6 is a block diagram showing another example layout of a power supply system according to the first embodiment;
FIG.7 is a view given in explanation of an example of a method of finding a current instruction value;
FIG. 8 is a block diagram showing a layout diagram of a power supply system according to a second embodiment;
FIG.9 is a view showing an example layout of an internal voltage computation section as shown in FIG. 8;
FIG.10 is a block diagram showing an example layout of a power supply system according to a third embodiment; and
FIG.11 is a block diagram showing an example layout of a power supply system according to a fourth embodiment.

## DETAILED DESCRIPTION

Embodiments are described below with reference to the drawings.

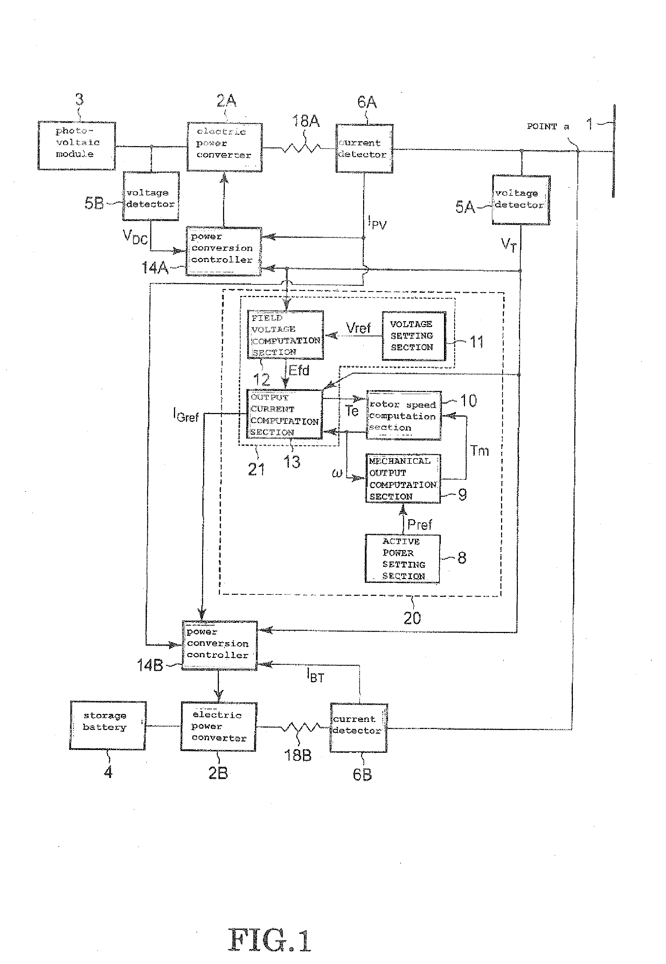

FIG.1 is a diagram showing an example layout of a power supply system according to a first embodiment.

A power supply system according to the present embodiment is applied to a photovoltaic system, as an example of power generation equipment that utilizes renewable energy. Apart from photovoltaic systems, as power generation equipment utilizing renewable energy, the embodiment may also be applied to power generation equipment such as for example wind power generation systems, geothermal power generation systems, wave, tidal power or ocean current power generation systems and the like.

The power supply system according to the present embodiment comprises: a photovoltaic module 3, a first electric power converter 2A, a first voltage detector 5A, a second voltage detector 5B, a first current detector 6A, a first power conversion controller 14A, a second electric power converter 2B, a second current detector 6B, a power generator characteristic computation unit 20, an storage battery (electric power storage means) 4, and a second power conversion controller 14B. The combination of the photovoltaic module 3, first electric power converter 2A, first power conversion controller 14A, a smoothing reactor 18A, second voltage detector 5B, and first current detector 6A constitutes an example of a solar power generation system.

The first voltage detector 5A is connected in the vicinity of the connection point (point a) of the first electric power converter 2A, the second electric power converter 2B and the power system 1. This first voltage detector 5A detects the voltage at the connection point of the first electric power converter 2A, the second electric power converter 2B, to be described, and the power system 1.

The second voltage detector 5B is arranged in the DC circuit between the photovoltaic module 3 and the first electric power converter 2A, and detects the DC voltage $V_{DC}$ of this DC circuit. The second voltage detector 5B outputs this detected DC voltage $V_{DC}$ to the first power conversion controller 14A.

The first current detector 6A is arranged between the power system 1 and the first electric power converter 2A and detects the AC current $I_{PV}$ that is output from the first electric power converter 2A. The first current detector 6A outputs this detected AC current $I_{PV}$ to the first power conversion controller 14A and the second power conversion controller 14B.

The photovoltaic module 3 includes a controller whereby the output power from the photovoltaic module 3 is controlled to a maximum, depending on the solar radiation amount (MPPT control: Maximum Power Point Tracking Control) ; when the output power from the photovoltaic module 3 becomes large, $V_{DC}$ becomes high and, conversely, when the output power from the photovoltaic module 3 is small, $V_{DC}$ is low.

The first electric power converter 2A is connected with the power system 1 through the smoothing reactor 18A and converts the DC power generated by the photovoltaic module 3 to AC power. The first electric power converter 2A operates so as to supply the power generated by the photovoltaic module 3 to the power system 1. Consequently, the output power of the first electric power converter 2A constitutes power that reflects fluctuation of the power generation amount of the photovoltaic module 3 in accordance with the fluctuation of the solar radiation amount. Specifically, the output power of the first conversion device 2A becomes large when the output power from the photovoltaic module 3 becomes large. Contrariwise, when the output power from the photovoltaic module 3 becomes small, the output power from the first electric power converter 2A becomes small. In this embodiment, the electric power converter 2A is a so-called two way inverter, that outputs AC voltage in accordance with a control signal that is output from the first power conversion controller 14A.

The first power conversion controller 14A controls the operation of the first electric power converter 2A in accordance with the output value $V_T$ of the first voltage detector 5A, the output value $V_{DC}$ of the second voltage detector 5B and the output value $I_{PV}$ of the current detector 6A. The first power conversion controller 14A controls the output voltage of the first electric power converter 2A using the output value $V_T$ of the first voltage detector 5A and the output value $I_{PV}$ of the first current detector 6A, so that power is output wherein the output value $V_{DC}$ of the second voltage detector 5B is constant.

The second current detector 6B is arranged between the power system 1 and the second electric power converter 2B, so as to detect the AC current $I_{BT}$ that is output to the power system 1 from the second electric power converter 2B. The second current detector 6B outputs the detected AC current $I_{BT}$ to the second power conversion controller 14B.

The second electric power converter 2B is connected with the power system 1 through a smoothing reactor 18B. The second electric power converter 2B is a two way inverter, that, in accordance with a control signal that is output from the second power conversion controller 14B, converts the discharge power of storage battery 4 to AC power, which it outputs to the power system 1, and converts the charging power to the storage battery 4 to DC power.

The second power conversion controller 14B controls the operation of the second electric power converter 2B in accordance with the output value $V_T$ of the first voltage detector 5A, the output value $I_{BT}$ of the second current detector 6B, the output value $I_{PV}$ of the first current detector 6A, and the output current $I_{Gref}$ of the virtual power generator.

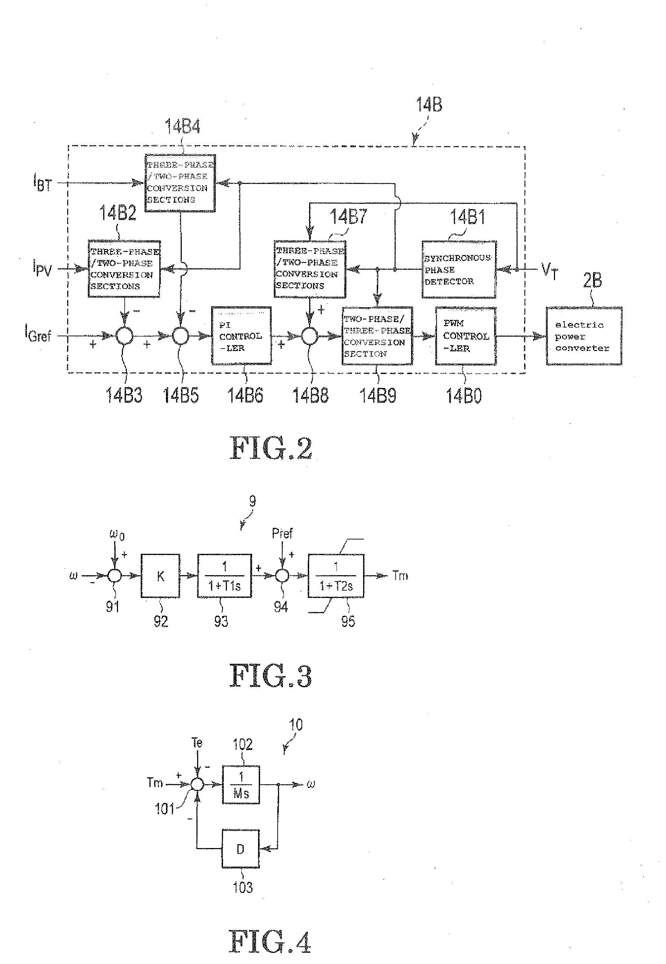

FIG.2 is a block diagram showing a layout example of the second power conversion controller 14B. The output voltage of the second electric power converter 2B is controlled so that the output value $I_{BT}$ of the current detector 6B and the difference of the output current $I_{Gref}$ of the virtual power generator and the output $I_{PV}$ of the current detector 6A are equal.

The second power conversion controller 14B comprises: a synchronous phase detector 14B1, three-phase/two-phase conversion sections 14B2, 14B4, 14B7, subtractors 14B3, 14B5, a PI controller (proportional integral control) 14B6, an adder 14B8, a two-phase/three-phase conversion section 14B9, and a PWM controller (pulse width modulation control) 14B0.

The synchronous phase detector 14B1 receives the AC voltage $V_T$ detected by the first voltage detector 5A and detects synchronous phase of the three-phase AC voltage, and delivers output to the three-phase/two-phase conversion sections 14B2, 14B4, 14B7, and two-phase/three-phase conversion section 14B9.

The three-phase/two-phase conversion section 14B2 receives the AC current $I_{PV}$ detected by the first current detector 6A and, in accordance with the phase angle received from the synchronous phase detector 14B1, converts the three-phase AC current $I_{PV}$ to two-phase.

The three-phase/two-phase conversion section 14B4 receives the AC current $I_{BT}$ detected by the second current detector 6B, and, in accordance with the phase angle received from the synchronous phase detector 14B1, converts the three-phase AC current $I_{BT}$ to two-phase.

The three-phase/two-phase conversion section 14B7 receives the AC voltage $V_T$ detected by the first voltage detector 5A and, in accordance with the phase angle received from the synchronous phase detector 14B1, converts the three-phase AC voltage $V_T$ to two-phase.

The subtractor 14B3 receives the output current $I_{Gref}$ of the virtual power generator and the two-phase AC current $I_{PV}$, and outputs the difference obtained by subtracting the current $I_{PV}$ from the current $I_{Gref}$ to the subtractor 14B5.

The subtractor 14B5 receives the difference that is output from the subtractor 14B3 and the two-phase AC current $I_{BT}$, and outputs the difference obtained by subtracting the current $I_{BT}$ from this difference to the PI controller 14B6. Specifically, the difference that is output from the subtractor 14B5 is a value obtained by subtracting the current $I_{PV}$ and the current $I_{BT}$ from the current $I_{Gref}$.

The PI controller 14B6 receives the difference that is output from the subtractor 14B5, calculates a two-phase voltage such that this received value becomes zero, and outputs this.

The adder 14B8 receives the voltage that is output from the PI controller 14B6 and the two-phase voltage $V_T$ that is output from the three-phase/two-phase conversion section 14B7, adds these, and then outputs the result to the two-phase/three-phase conversion section 14B9.

The two-phase/three-phase conversion section 14B9 receives the two-phase voltage that is output from the adder 14B8, and, in accordance with the phase angle that is received from the synchronous phase detector 14B1, converts the two-phase voltage to a three-phase voltage. This three-phase voltage that is thus output is the target value for the three-phase AC voltage to be output from the second electric power converter 2B.

The PWM controller 14B0 receives the three-phase AC voltage that is output from the two-phase/three-phase conversion section 14B9, and outputs a PWM control signal such that this received AC voltage is output from the electric power converter 2B.

The power generator characteristic computation unit 20 supplies the output current $I_{Gref}$ for the virtual power generator. The power generator characteristic computation unit 20 comprises: an active power setting section 8, a mechanical output computation section 9 that is supplied with the output value of the active power setting section 8 and the output value of a rotor speed computation section 10, the rotor speed computation section 10 that is supplied with the output value Te of an output current computation section 13 and the output value Tm of the mechanical output computation section 9, and an electrical characteristic computation section 21.

The operation of a power generator characteristic computation unit 20 that generates the output current $I_{Gref}$ of the virtual power generator is described below.

The active power setting section 8 acts as a simulated synchronous power generator that outputs to the power system 1 an active power set value $P_{ref}$ that is to be output therefrom.

FIG.3 is a block diagram showing diagrammatically an example layout of the mechanical output computation section 9.

The mechanical output computation section 9 corresponds to the control device called a governor of the synchronous power generator and is constructed for example so as to implement the control block diagram shown in FIG. 3. The mechanical output computation section 9 comprises: a subtractor 91 that outputs the difference obtained by subtracting the angular frequency $\omega$ from the fundamental angular frequency $\omega_0$; a proportional block 92 of amplification factor K; first order lag blocks 93, 95 of time constants T1, T2; and an adder 94 that adds the output of the first order lag block 93 and the active power set value $P_{ref}$ and outputs the sum thereof; this mechanical output computation section 9 inputs the angular frequency $\omega$ which is the output of the rotor speed computation section 10 and the active power set value $P_{ref}$ which is the output of the active power setting section 8 and calculates and outputs a value corresponding to the mechanical output Tm of the synchronous power generator. The mechanical output Tm corresponds to the torque that is generated by for example steam energy in a thermal power generator.

If the input of the first order lag block 93 and the proportional block 92 has a positive value i.e. when the angular frequency $\omega$ drops below the fundamental angular frequency $\omega_0$, $(\omega_0-\omega>0)$, ultimately, the mechanical output Tm is increased. Conversely, if the input of the first order lag block 93 and the proportional block 92 has a negative value i.e. when the angular frequency $\omega$ rises above the fundamental angular frequency $\omega_0$, $(\omega_0-\omega<0))$, ultimately, the mechanical output Tm is decreased. The magnitude or speed of the change in the mechanical output Tm with respect to the change in angular frequency $\omega$ is determined by the amplification factor K of the proportional block 92 and the time constants T1, T2 of the first order lag blocks 93, 95.

FIG.4 is a block diagram showing diagrammatically an example layout of the rotor speed computation section 10. The rotor speed computation section 10 calculates the kinetic motion equation of the synchronous power generator. The rotor speed computation section 10 is constructed so as to implement for example the block diagram shown in FIG. 4. The rotor speed computation section 10 comprises a subtractor 101, integrator 102, and proportional block 103. The constant M of the integrator 102 corresponds to the inertia constant of the power generator including the turbine, and the coefficient D of the proportional block 103 corresponds to the damping coefficient.

If the mechanical output Tm is fixed, when the electrical output torque Te is decreased by for example reduction in the load of the power system 1, the input to the integrator 102 shown in FIG. 4 becomes a positive value, so, with a rate of change depending on the inertia constant M and damping coefficient D, the angular frequency $\omega$ rises. Conversely, when the electrical output torque Te is increased by for example increase in the load of the power system 1, the input to the integrator 102 becomes a negative value, so, with a rate of change depending on the inertia constant M and damping coefficient D, the angular frequency $\omega$ falls.

If the electrical output torque Te is fixed but the mechanical output Tm changes, the polarities are reversed. Consequently, if the mechanical output Tm decreases, the angular frequency $\omega$ falls, while if the mechanical output Tm increases, the angular frequency $\omega$ rises.

The rotor speed computation section 10 calculates the angular frequency $\omega$ of the synchronous power generator as described above. The mechanical output computation section 9 reduces the mechanical output Tm when the angular frequency $\omega$ rises but increases the mechanical output Tm when the angular frequency $\omega$ drops and so acts to suppress fluctuation of the angular frequency $\omega$. The angular frequency $\omega$ calculated by the rotor speed computation section 10 is supplied to the electrical characteristic computation section 21.

The electrical characteristic computation section 21 comprises: a voltage setting section 11, a field voltage computation section 12 that is supplied with an output value $V_{ref}$ of the voltage setting section 11 and the output value (near end voltage) $V_T$ of the first voltage detector 5A; and an output current computation section 13 that is supplied with the output value (near end voltage) $V_T$ of the first voltage detector 5A, the output value $\omega$ of the rotor speed computation section 10, and the output value Efd of the field voltage computation section 12.

The voltage setting section 11 outputs the voltage set value $V_{ref}$, which is the target value for the near end voltage $V_T$ of the connection point (point a) of the power system 1.

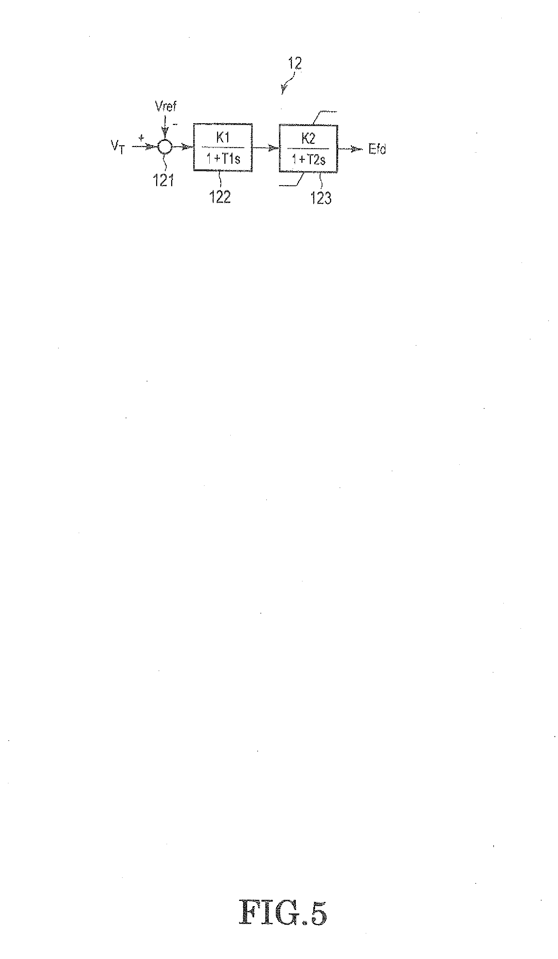

FIG.5 is a block diagram showing diagrammatically an example layout of the field voltage computation section 12. The field voltage computation section 12 is constructed so as to implement the control block shown for example in FIG. 5, corresponding to the excitation system of the synchronous power generator. The field voltage computation section 12 calculates a value Efd corresponding to the field voltage of the synchronous generator, in accordance with the difference ($V_{ref} - V_T$) of the voltage set value $V_{ref}$ and the near end voltage $V_T$ at the connection point (point a) obtained by the first voltage detector 5A, and outputs this to the output current computation section 13. If the near end voltage $V_T$ is smaller than the voltage set value $V_{ref}$ ($V_{ref}-V_T>0$), the first order lag input is a positive value, so the value Efd corresponding to the field voltage is increased; conversely, if the near end voltage $V_T$ is larger than the voltage set value $V_{ref}$ ($V_{ref}-V_T<0$), the first order lag input is a negative value, so the value Efd corresponding to the field voltage is decreased.

The output current computation section 13 calculates the electrical characteristic of the synchronous power generator i.e. the so-called Park's equation. The output current computation section 13 calculates the output current $I_{Gref}$ of the virtual power generator, using as input values: the value Efd corresponding to the field voltage, which is output by the field voltage computation section 12; the angular frequency $\omega$, which is output by the rotor speed computation section 10; and the near end voltage $V_T$ of the connection point (point a) that is obtained by the first voltage detector 5A.

Represented in terms of a simplified calculation formula, the power generator output current may be found by expression (1) : the real part of the result obtained by multiplying the power generator output current by the terminal voltage is the active power output, and is found by expression (2).

[Math 1]

$$I_G = \frac{E_G \angle \delta_{EG} - V_T \angle \delta_{VT}}{jX} \qquad (1)$$

[Math 2]

$$P_G = \frac{E_G \cdot V_T}{X} \sin(\delta_{EG} - \delta_{VT}) \qquad (2)$$

where $E_G$ is the magnitude of the internal voltage of the power generator, $\delta_{EG}$ is the phase angle of the internal voltage of the power generator, X is the internal reactance of the power generator, $V_T$ is the magnitude of the power generator terminal voltage, $\delta_{VT}$ is the phase angle of the power generator terminal voltage, $P_G$ is the power generator active power output, $I_G$ is the power generator output current (complex number). The output $I_{Gref}$ of the power generator characteristic computation unit 20 corresponds to $I_G$ in expression (1) and $\delta_{EG}$ corresponds to the product $(\omega t)$ of the angular frequency $\omega$ and the time.

When the angular frequency i.e. the angular frequency $\omega$ of the power system 1 drops, due to for example increased load, the angular frequency $\omega$ is controlled so as to return to the vicinity of the fundamental angular frequency $\omega_0$, by the action of the mechanical output computation section 9 and the rotor speed computation section 10, so $\delta_{EG}$-$\delta_{VT}$ becomes large and $P_G$ is increased. $I_G$ and $P_G$ correspond to the current and the active power supplied to the power system 1. Consequently, when the angular frequency of the power system 1, i.e. the angular frequency $\omega$ drops due to increase in load or the like, the action is such as to suppress such lowering of the angular frequency of the power system 1.

Conversely, when the angular frequency of the power system 1, i.e. the angular frequency $\omega$, rises due for example to diminution in the load, $\delta_{EG}$-$\delta_{VT}$ becomes smaller, so supply of power to the power system 1 is decreased, i. e. the action is such as to suppress such elevation of the angular frequency of the power system 1.

$E_G$ shown in expression (1) and expression (2) changes in the same direction as the value Efd corresponding to the field voltage which is output by the field voltage computation section 12, so when the voltage of the power system 1 drops, the value Efd corresponding to the field voltage becomes larger and $E_G$ also becomes larger: this therefore acts so as to suppress voltage drop of the power system 1. Conversely, when the voltage of the power system 1 rises, the value Efd corresponding to the field voltage becomes smaller and $E_G$ also becomes smaller, so this acts to suppress elevation of the voltage of the power system 1.

Next, the action in the steady condition in which the voltage and angular frequency of the power system are stable will be described. The power generated by the photovoltaic module 3 changes depending on the amount of solar radiation, so the power that is supplied to the power system 1 from the first electric power converter 2A also changes depending on the amount of solar radiation. Usually, the voltage of the connection point (point a) does not depart much from the reference value, so, since the power is the product of voltage and current, the change of power in the steady condition is substantially the same as the change in current, and may therefore be represented by the output value $I_{PV}$ of the first current detector 6A. In the steady condition, the output value $I_{Gref}$ of the power generator characteristic computation unit 20 is equivalent to a synchronous power generator of fixed output and is therefore fixed. The second power conversion controller 14B performs control such that a current corresponding to the difference of the output value $I_{Gref}$ of the power generator characteristic computation unit 20 and the output value $I_{PV}$ of the first current detector 6A flows from the second electric power converter 2B to the power system 1. As a result, the total value of the supplied power from the photovoltaic module 3 through the first electric power converter 2A and the supplied power from the storage battery 4 through the second electric power converter 2B, i.e. the supplied power to the power system 1, is constant.

It should be noted that, if the voltage obtained by the first voltage detector 5A is not automatically controlled to a specified value i.e. if voltage fluctuation due to increase/decrease of the active power etc is permitted, the field voltage computation section 12 could be dispensed with, by setting the value Efd corresponding to the field voltage by the voltage setting section 11.

Also, when suppression of fluctuation of the angular frequency $\omega$ is unnecessary, only suppression of fluctuation of the characteristic of the synchronous power generator on its own being necessary, the mechanical output computation section 9 can be dispensed with by using the active power setting section 8 to set the mechanical output Tm.

With the photovoltaic system according to the present embodiment, the second power conversion controller 14B controls the output current $I_G$ of the second electric power converter 2B using: kinetic motion equation of the synchronous power generator and electrical characteristic expression (Park's equation); the governor, which constitutes the control device of the synchronous power generator; and the difference of the output $I_{Gref}$ of the power generator characteristic computation unit 20 that calculates the characteristic of the excitation system and the output $I_{PV}$ of the current detector 6A that corresponds to the power supplied to the power system 1 from the photovoltaic module 3 through the first electric power converter 2A. In this way, the total of the power supplied to the power system 1 from the first electric power converter 2A and the second electric power converter 2B is equivalent to that of a synchronous power generator in regard to change of voltage and angular frequency of the power system 1. Also, the power system can be treated in the same way as a synchronous power generator, since it can be used in the same way as a synchronous power generator in regard to for example output of active power as scheduled.

Thus, with a power supply system according to the embodiment described above, by conferring the same characteristics as a synchronous power generator on a power generation system representing a combination of power generation equipment utilizing renewable energy such as photovoltaic and a power storage device such as an storage battery, the power system can be treated in the same way as a synchronous power generator from the point of view of monitoring and control of the system as a whole, so a power supply system can be provided that is capable of stable power supply when systems linked with the power system are operated.

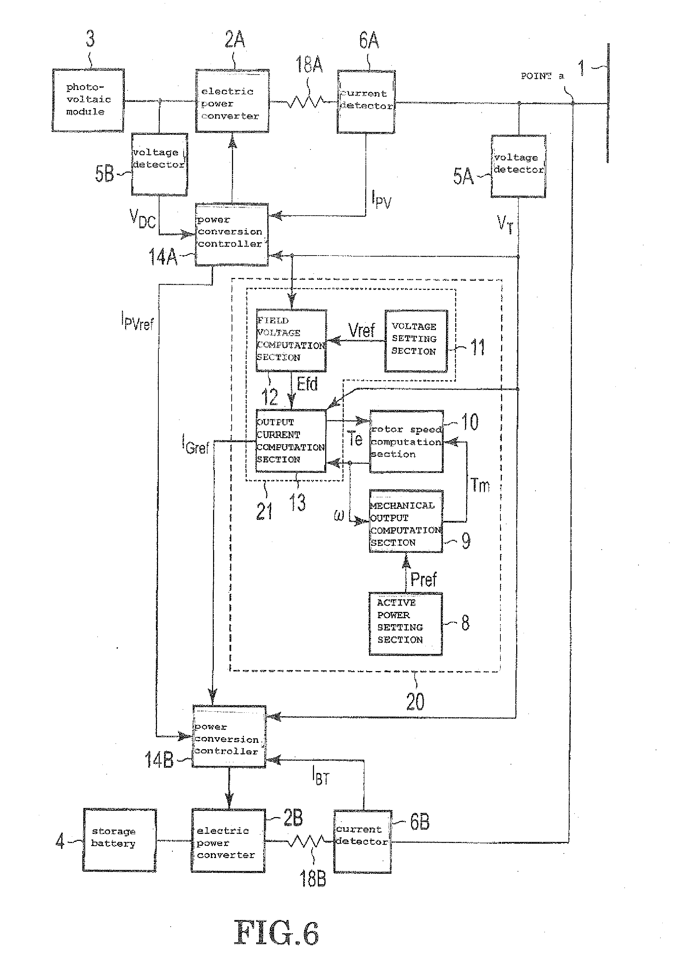

FIG.6 is a block diagram showing another layout example of a power supply system according to the first embodiment. In the following description, items which are the same as in the case of the power supply system of the first embodiment described above are given the same reference symbols to avoid duplicated description.

In the case of the power supply system shown in FIG. 6, the input of the second power conversion controller 14B is the output $I_{PVref}$ of the first power conversion controller 14A, rather than the output of the first current detector 6A. Otherwise, this power supply system is the same as the power supply system shown in FIG. 1.

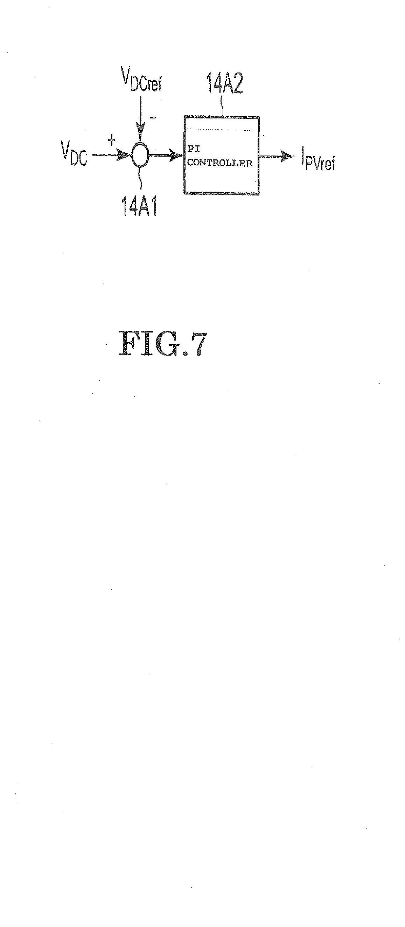

FIG. 7 is a view showing an example of a block diagram for finding the current instruction value $I_{PVref}$. The first power conversion controller 14A is provided with a subtractor 14A1 that subtracts a voltage instruction value $V_{DCref}$ from the voltage $V_{DC}$ and a PI controller 14A2 that outputs a current instruction value $I_{PVref}$ such that the difference of the voltage $V_{DC}$ and the voltage instruction value $V_{DCref}$ becomes zero. When the output power from the photovoltaic module 3 becomes large, the voltage $V_{DC}$ detected by the second voltage detector 5B becomes high, and the current instruction value $I_{PVref}$ also becomes large. The output current $I_G$ of the first electric power converter 2A is controlled so as to be equal to the current instruction value $I_{PVref}$, so, if the voltage is roughly fixed, the output power of the first electric power converter 2A also becomes large. Contrariwise, if the output power from the photovoltaic module 3 becomes small, $V_{DC}$ detected by the second voltage detector 5B becomes low, so the current instruction value $I_{PVref}$ and the output power of the first electric power converter 2A also become small.

As described above, the current instruction value $I_{PVref}$ and the output value $I_{PV}$ of the first current detector 6A are substantially the same, so, even if the current instruction value $I_{PVref}$ is employed as the input of the second power conversion controller 14B, instead of the output from the first current detector 6A, the same beneficial effect as in the case of the embodiment described above is obtained.

Next, a power supply system according to a second embodiment will be described in detail with reference to the drawings.

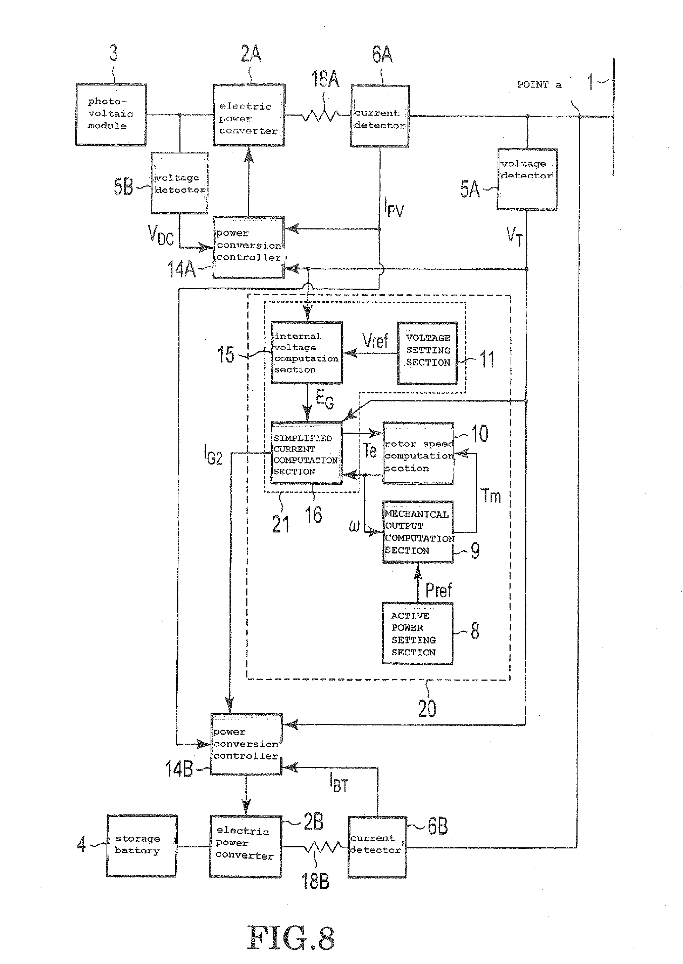

FIG. 8 is a block diagram showing diagrammatically an example layout of a power supply system according to the second embodiment.

The construction of the electrical characteristic computation section 21 of the power generator characteristic computation unit 20 of the power supply system according to this embodiment differs from that of the power supply system of the first embodiment described above.

The electrical characteristic computation section 21 comprises: a voltage setting section 11; an internal voltage computation section 15 whereby a set value $V_{ref}$ that is output from the voltage setting section 11 and a voltage (near end voltage) $V_T$ that is output from the first voltage detector 5A are supplied; and a simplified current computation section 16 that is supplied with the output value $E_G$ of the internal voltage computation section 15, the output value $\omega$ of the rotor speed computation section 10 and the output value $V_T$ of the first voltage detector 5A. The output of the electrical characteristic computation section 21 i.e. the output value $I_{G2}$ of the simplified current computation section 16, is supplied to the second power conversion controller 14B.

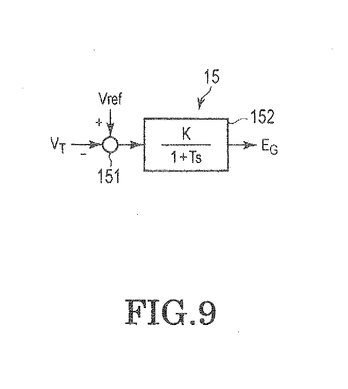

FIG. 9 is a block diagram showing diagrammatically an example layout of the internal voltage computation section 15.

The internal voltage computation section 15 comprises: a subtractor 151 for example constituted so as to implement the transfer function shown in FIG. 9 and that outputs the difference obtained by subtracting the near end voltage $V_T$ from the set value $V_{ref}$, and a first-order lag block 152 of time constant T. The internal voltage computation section 15 calculates the internal voltage $E_G$ of the virtual power generator that makes the near end voltage $V_T$, which is the output of the first voltage detector 5A, equal to the set value $V_{ref}$, which is the output of the voltage setting section 11.

The simplified current computation section 16 calculates the output current $I_{G2}$ of the virtual power generator from the output value $E_G$ of the internal voltage computation section 15, the output value $\omega$ f the rotor speed computation section 10, and the output value $V_{DC}$ of the first voltage detector 5A. As an example, the output current $I_{G2}$ is obtained by expression (1) given above; $\delta_{VT}$ is obtained by an ordinary synchronized phase detector (PLL: Phase-Locked Loop); and $\delta_{EG}$ is obtained by the following expression (3).

[Math 3]

$$\delta_{EG} = \omega_0 \int \omega \, dt \qquad\qquad (3)$$

The output current $I_{PV}$ of the photovoltaic module 3 through the first electric power converter 2A, the output current $I_{G2}$ of the virtual power generator, the output value $V_{DC}$ of the first voltage detector 5A, and the output value $I_{BT}$ of the second current detector 6B are supplied to the second power conversion controller 14B; the second power conversion controller 14B controls the second electric power converter 2B so that the output value $I_{BT}$ of the second current detector 6B, which is the output current of the storage battery 4 through the second electric power converter 2B, is equal to the difference of the output current $I_{G2}$ of the virtual power generator and the output current $I_{PV}$ of the first electric power converter 2A. As a result, the current, i.e. power, supplied to the power system 1 from the connection point (point a) is the same as that of a virtual power generator.

It should be noted that, if the voltage obtained by the first voltage detector 5A is not automatically controlled to a set value i.e. if voltage fluctuation produced by increase/decrease of active power is permitted, the internal voltage computation section 15 can be dispensed with by setting the internal voltage $E_G$ of the virtual power generator, by using the voltage setting section 11.

Also, when suppression of fluctuation of the angular frequency $\omega$ is unnecessary, only suppression of fluctuation of the characteristic of the synchronous power generator on its own being necessary, the mechanical output computation section 9 can be dispensed with by using the active power setting section 8 to set the mechanical output Tm.

As described above, by simplifying the content of processing by the power generator characteristic computation unit 20 that simulates the characteristics of a synchronous power generator, characteristics that are close to those of a synchronous power generator can be conferred on a power supply system by a small amount of computation. Also, the power supply system can be treated in the same way as a synchronous power generator, since operation is the same as that of a synchronous power generator in regard to for example output of active power in accordance with scheduling.

Specifically, with a power supply system according to this embodiment, a power supply system can be provided that is capable of being treated in the same way as a synchronous power generator from the point of view of monitoring and control of the power system as a whole.

Next, a power supply system according to a third embodiment will be described in detail with reference to the drawings.

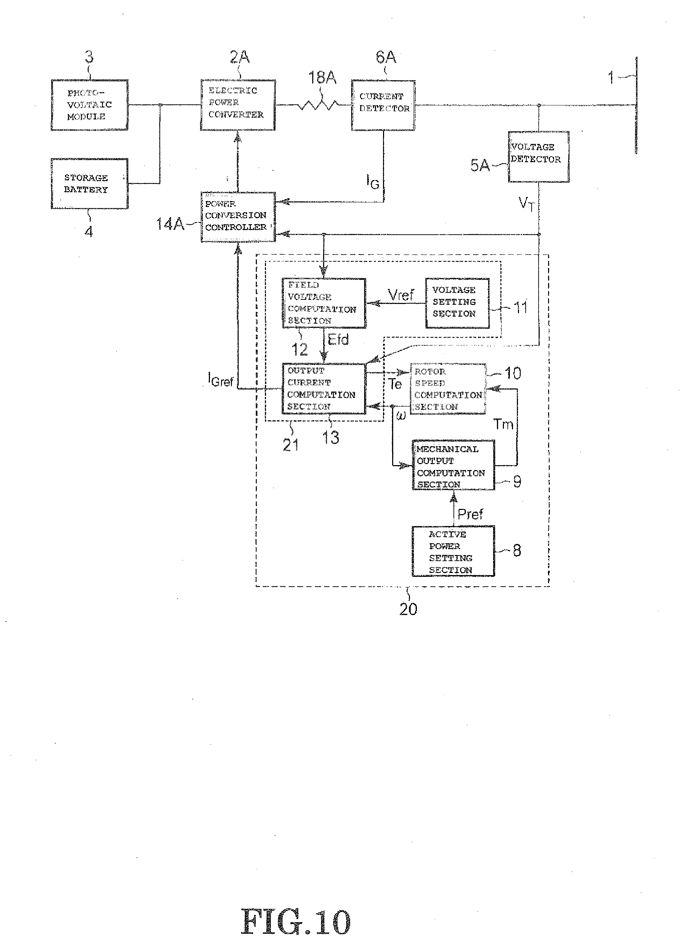

FIG. 10 is a block diagram showing diagrammatically an example of the layout of a power supply system according to the third embodiment.

The power supply system according to this embodiment differs from the power supply system according to the first embodiment described above in regard to the position of connection of the storage battery 4 and the destination to which the output value of the power generator characteristic computation unit 20 is supplied.

The storage battery 4 is connected to the photovoltaic module 3 and to the first electric power converter 2A. Specifically, the total of the power generated by the photovoltaic module 3 and the charging/discharging power from the storage battery 4 is converted to AC power by the first electric power converter 2A, before being supplied to the power system 1. The power supply system of this embodiment therefore does not comprise a second power conversion controller 14B, second electric power converter 2B or second current detector 6B. However, it should be noted that, in the power supply system of this embodiment, control is exercised so that the DC voltage to the first power conversion controller 14A is constant between the photovoltaic module 3 and the storage battery 4, as will be described later. Consequently, in the power supply system of this embodiment, no second voltage detector 5B is provided.

The power generator characteristic computation unit 20 has the same construction as in the power supply system of the first embodiment, and the power generator characteristic computation unit 20 calculates an command value $I_{Gref}$ corresponding to the output current of the virtual power generator. The output value (command value) $I_{Gref}$ of the power generator characteristic computation unit 20 is supplied to the first power conversion controller 14A.

The first power conversion controller 14A controls the output voltage of the first electric power converter 2A so that the output current IG of the first electric power converter 2A detected by the first current detector 6A and the command value $I_{Gref}$ are equal, so the power that is supplied to the power system 1 from the photovoltaic module 3 and the storage battery 4 through the first electric power converter 2A is equal to that of a virtual power generator.

The photovoltaic module 3 and the storage battery 4 include a control device whereby the output power from the photovoltaic module 3 is controlled to a maximum, depending on the solar radiation amount (MPPT control), and the output power from the storage battery 4 is controlled so that the DC voltage is constant.

If the output power to the power system 1 from the first electric power converter 2A is larger than the output power from the photovoltaic module 3, the DC voltage to the first electric power converter 2A drops, so, in order to raise the DC voltage, power is supplied from the storage battery 4 (i.e. it is discharged).

Conversely, if the output power from the photovoltaic module 3 is larger than the output power to the power system 1, the DC voltage rises, so, in order to lower the DC voltage, power is absorbed by the storage battery 4 (i.e, it is charged) . In this way, the difference between the power corresponding to the command value $I_{Gref}$ and the power generated by the photovoltaic module 3 is made up by charging/discharging of the storage battery 4.

As described above, even in the case where the DC voltage to the first electric power converter 2A is controlled to be constant by connecting the photovoltaic module 3 and the storage battery 4 to the first electric power converter 2A, the first power conversion controller 14A controls the output voltage of the first electric power converter 2A in such a way that the output current $I_G$ of the first electric power converter 2A detected by the first current detector 6A and the command value $I_{Gref}$ are equal: in this way, the same characteristics as a synchronous power generator can be conferred on a power generation system combining power generation equipment utilizing renewable energy such as photovotaic and a power storage device such as an storage battery.

That is, with this embodiment, the power system can be treated in the same way as a synchronous power generator from the point of view of monitoring and control of the system as a whole, so a power supply system can be provided that is capable of stable power supply when systems linked with the power system are operated.

Next, a power supply system according to a fourth embodiment will be described in detail with reference to the drawings.

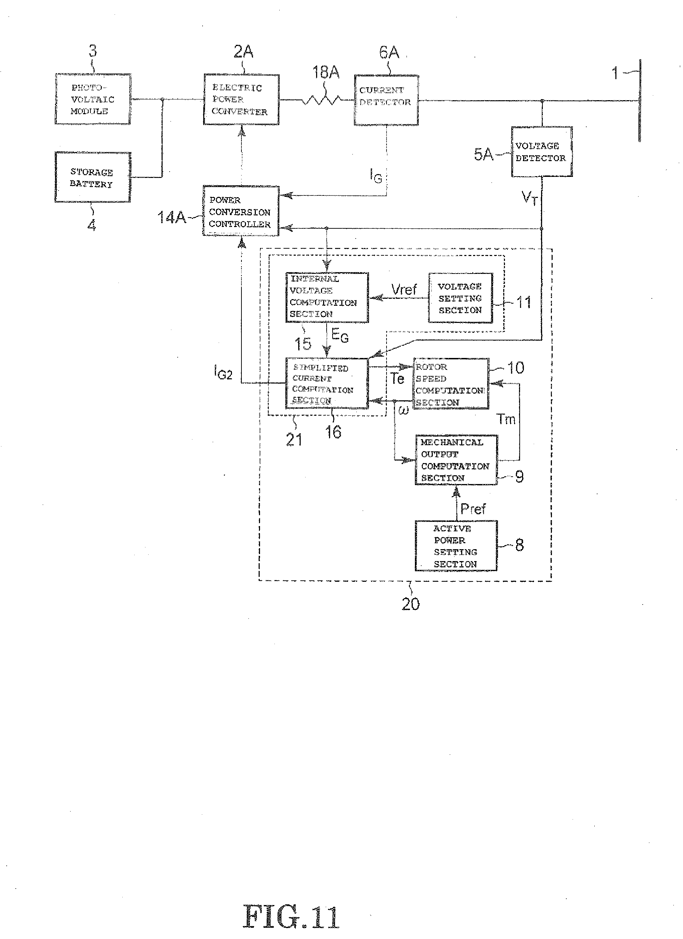

FIG.11 is a block diagram showing diagrammatically an example layout of a power supply system according to the fourth embodiment.

The power supply system according to this embodiment differs from the power supply system according to the second embodiment in regard to the position of connection of the storage battery 4 and the destination of supply of the output value of the power generator characteristic computation unit 20.

The storage battery 4 is connected with the photovoltaic module 3 and the first electric power converter 2A. Specifically, the total of the power generated by the photovoltaic module 3 and the charging/discharging power of the storage battery 4 is converted to AC power by the first electric power converter 2A before being supplied to the power system 1. Consequently, the power supply system of this embodiment does not comprise a second power conversion controller 14B, second electric power converter 2B or second current detector 6B. However, it should be noted that, in the power supply system of this embodiment, control is exercised so that the DC voltage to the first power conversion controller 14A is constant between the photovoltaic module 3 and the storage battery 4, as will be described later. Consequently, in the power supply system of this embodiment, no second voltage detector 5B is provided.

The power generator characteristic computation unit 20 has the same construction as the power supply system of the second embodiment; the power generator characteristic computation unit 20 calculates an command value $I_{G2}$ corresponding to the output current of the virtual power generator. The output value (command value) $I_{G2}$ of the power generator characteristic computation unit 20 is supplied to the first power conversion controller 14A.

Since the first power conversion controller 14A controls the output voltage of the first electric power converter 2A so that the output current $I_G$ of the first electric power converter 2A that is detected by the first current detector 6A and the command value $I_{G2}$ are equal, the power that is supplied to the power system 1 from the photovoltaic module 3 and the storage battery 4 through the first electric power converter 2A is equal to that of a virtual power generator.

Also, just as in the case of the third embodiment, the photovoltaic module 3 and the storage battery 4 include control devices, so that the difference of the power corresponding to the command value $I_{G2}$ and the power generated by the photovoltaic module 3 is made up by charging/discharging of the storage battery 4.

As described above, even in the case where the DC voltage to the first electric power converter 2A is controlled to be constant by connecting the photovoltaic module 3 and the storage battery 4 to the first electric power converter 2A, the first power conversion controller 14A controls the output voltage of the first electric power converter 2A in such a way that the output current $I_G$ of the first electric power converter 2A detected by the first current detector 6A and the command value $I_{G2}$ are equal: in this way, the same characteristics as a synchronous power generator can be conferred on a power generation system combining power generation equipment utilizing renewable energy such as solar power and a power storage device such as an storage battery.

Specifically, with this embodiment, a power supply system can be provided wherein it is possible to treat the power system equivalently to a synchronous power generator, from the point of view of monitoring and control of the power system as a whole, so as to achieve stable power supply even when other systems are operated in linked fashion with the power system.

While various embodiments of the present invention have been described, these embodiments are presented merely by way of example and are not intended to restrict the scope of the invention. Novel embodiments may be put into practice in various other ways, and various deletions, substitutions or alterations may be performed without departing from the gist of the invention. Such embodiments or modifications thereof are included in the scope and gist of the invention and are included in the invention as set out in the claims and equivalents thereof.

**Claims**

1. A power supply system comprising:

   electric power storage means;
   a second electric power converter that converts power discharged by said electric power storage means to AC power and that converts charging power to said electric power storage means to DC power;
   a second current detector that detects a current that is output from said second electric power converter;
   a first electric power converter that converts DC power to AC power and supplies said AC power;
   an electric characteristic computation section that calculates an output current and an electrical output torque of a virtual power generator, based on a voltage, angular frequency and voltage set value of a connection point between said second electric power converter and said power supply system;
   a rotor speed computation section that calculates said angular frequency of said virtual power generator, based on said electrical output torque of said virtual power generator calculated by said electrical characteristic computation section and an output target value for active power; and
   a second power conversion controller that controls said second electric power converter in accordance with a difference of a current that is output to said power system from said first electric power converter and an output current of said virtual power generator.

2. A power supply system comprising:

   electric power storage means;
   a second electric power converter that converts power discharged by said electric power storage means to AC power and that converts charging power to said electric power storage means to DC power;
   a second current detector that detects a current that is output from said second electric power converter;
   a first electric power converter that converts DC power to AC power and supplies said AC power;
   an electric characteristic computation section that calculates an output current and an electrical output torque of a virtual power generator, based on a voltage, angular frequency and voltage set value of a connection point between said second electric power converter and said power supply system;
   a rotor speed computation section that calculates said angular frequency of said virtual power generator, based on said electrical output torque of said virtual power generator calculated by said electrical characteristic computation section and an output target value for active power; and
   a second power conversion controller that controls said second electric power converter in accordance with a difference of an command value of an output current of said first electric power converter and an output current of said virtual power generator.

3. The power supply system according to claim 1 or claim 2,
   wherein said electric power storage means is an storage battery that is charged by and that discharges DC power.

4. A power supply system comprising:

   an electric characteristic computation section that calculates an output current and an electrical output torque of a virtual power generator, based on a voltage, angular frequency and voltage set value of a connection point between a first electric power converter that converts DC power to AC power and supplies said AC power and a power supply system;
   a rotor speed computation section that calculates said angular frequency of said virtual power generator, based on said electrical output torque of said virtual power generator calculated by said electrical characteristic computation section and an output target value for active power; and

a first power conversion controller that controls said first electric power converter in accordance with a difference of a current that is output to said power system from said first electric power converter and an output current of said virtual power generator.

**5.** The power supply system according to any of claim 1 to claim 4, further comprising a first voltage detector that detects the voltage of said connection point,
wherein said electrical characteristic computation section comprises:

a field voltage computation section that calculates a value corresponding to a field voltage, based on a voltage set value and a voltage detected by said first voltage detector; and
an output current computation section that calculates said electrical output torque and said output current of said virtual power generator, based on a value corresponding to said field voltage and said angular frequency, and a voltage detected by said first voltage detector.

**6.** The power supply system according to any of claim 1 to claim 4, further comprising a first voltage detector that detects a voltage of said connection point,
wherein said electrical characteristic computation section comprises:

an internal voltage computation section that calculates an internal voltage of said virtual power generator so as to make a voltage detected by said first voltage detector and said voltage set value equal; and
an output current computation section that calculates said electrical output torque and said output current of a virtual power generator, based on a voltage detected by said first voltage detector and said angular frequency, and said internal voltage.

**7.** The power supply system according to any of claim 1 to claim 6, further comprising a mechanical output computation section that calculates a mechanical output of said virtual power generator, based on a set value of said active power and said angular frequency,
wherein said rotor speed computation section calculates said angular frequency of said virtual power generator based on said mechanical output and said electrical output torque.

**Amended claims in accordance with Rule 137(2) EPC.**

**1.** A power supply system comprising:

electric power storage means (4);
a second electric power converter (2B) configured to convert power discharged by said electric power storage means to AC power and supply said AC power to a power system (1), and convert charging power to said electric power storage means (4) to DC power;
a second current detector (6B) configured to detect a current ($I_{BT}$) that is output from said second electric power converter (2B) to said power system (1);
a first electric power converter (2A) configured to convert DC power to AC power and supply said AC power to the power system (1);
an electric characteristic computation section (21) configured to calculate an output current ($I_{Gref}$) and an electrical output torque (Te) of a virtual power generator, based on a voltage ($V_T$) of a connection point between said second electric power converter (2B) and said power system (1), an angular frequency ($\omega$), and a voltage set value (Vref);
a rotor speed computation section (10) configured to calculate said angular frequency ($\omega$) of said virtual power generator, based on said electrical output torque (Te) of said virtual power generator calculated by said electrical characteristic computation section (21) and an output target value (Pref) for active power; and
a second power conversion controller (14B) configured to control said second electric power converter (2B) in accordance with a difference of a current ($I_{PV}$) that is output to said power system (1) from said first electric power converter (2A) and the calculated output current ($I_{Gref}$) of said virtual power generator.

**2.** A power supply system comprising:

electric power storage means (4);
a second electric power converter (2B) configured to convert power discharged by said electric power storage means (4) to AC power and supply said AC power to a power system (1), and convert charging power to said electric power storage means (4) to DC power;

a second current detector (6B) configured to detect a current ($I_{BT}$) that is output from said second electric power converter (2B) to said power system (1);

a first electric power converter (2A) configured to convert DC power to AC power and supply said AC power to the power system (1);

an electric characteristic computation section (21) configured to calculate an output current ($I_{Gref}$) and an electrical output torque (Te) of a virtual power generator, based on a voltage ($V_T$) of a connection point between said second electric power converter (2B) and said power system (1), an angular frequency ($\omega$), and voltage set value (Vref);

a rotor speed computation section (10) configured to calculate said angular frequency ($\omega$) of said virtual power generator, based on said electrical output torque (Te) of said virtual power generator calculated by said electrical characteristic computation section (21) and an output target value (Pref) for active power; and

a second power conversion controller (14B) configured to control said second electric power converter (2B) in accordance with a difference of an command value ($I_{PVref}$) of an output current of said first electric power converter (2A) and the calculated output current ($I_{Gref}$) of said virtual power generator.

3. The power supply system according to claim 1 or claim 2,
   wherein said electric power storage means (4) is an storage battery that is charged by and that discharges DC power.

4. A power supply system comprising:

   a first electric power converter (2A) configured to convert DC power to AC power and supply said AC power to a power system (1);

   an electric characteristic computation section (21) configured to calculate an output current ($I_{Gref}$) and an electrical output torque (Te) of a virtual power generator, based on a voltage ($V_T$) of a connection point between the first electric power converter (2A) and said power system (1), an angular frequency ($\omega$) and voltage set value (Vref);

   a rotor speed computation section (10) configured to calculate said angular frequency ($\omega$) of said virtual power generator, based on said electrical output torque (Te) of said virtual power generator calculated by said electrical characteristic computation section (21) and an output target value (Pref) for active power; and

   a first power conversion controller (14A) configured to control said first electric power converter (2A) in accordance with a difference of a current ($I_G$) that is output to said power system (1) from said first electric power converter and the calculated output current ($I_{Gref}$) of said virtual power generator.

5. The power supply system according to any of claim 1 to claim 4, further comprising a first voltage detector (5A) that detects the voltage ($V_T$) of said connection point,
   wherein said electrical characteristic computation section (21) comprises:

   a field voltage computation section (12) configured to calculate a value (Efd) corresponding to a field voltage, based on the voltage set value (Vref) and the voltage detected by said first voltage detector ($V_T$); and

   an output current computation section (13) configured to calculate said electrical output torque (Te) and said output current ($I_{Gref}$) of said virtual power generator, based on the value (Efd) corresponding to said field voltage and said angular frequency ($\omega$), and the voltage ($V_T$) detected by said first voltage detector.

6. The power supply system according to any of claim 1 to claim 4, further comprising a first voltage detector (5A) that detects the voltage ($V_T$) of said connection point,
   wherein said electrical characteristic computation section (21) comprises:

   an internal voltage computation section (15) configured to calculate an internal voltage (EG) of said virtual power generator so as to make the voltage ($V_T$) detected by said first voltage detector (5A) and said voltage set value (Vref) equal; and

   an output current computation section (16) configured to calculate said electrical output torque (Te) and said output current ($I_{Gref}$) of a virtual power generator, based on the voltage ($V_T$) detected by said first voltage detector (5a) and said angular frequency ($\omega$), and said internal voltage ($E_G$).

7. The power supply system according to any of claim 1 to claim 6, further comprising a mechanical output computation section (9) configured to calculate a mechanical output (Tm) of said virtual power generator, based on the set value (Pref) of said active power and said angular frequency (ω),
wherein said rotor speed computation section (10) is configured to calculate said angular frequency (ω) of said virtual power generator based on said mechanical output (Tm) and said electrical output torque (Te).

FIG.1

FIG.2

FIG.3

FIG.4

FIG.5

FIG.6

$V_{DCref}$   14A2

$V_{DC}$   +   PI CONTROLLER   $I_{PVref}$

14A1

# FIG.7

EP 2 822 163 A1

FIG.8

19

FIG.9

FIG.10

FIG.11

Europäisches
Patentamt

European
Patent Office

Office européen
des brevets

# EUROPEAN SEARCH REPORT

Application Number

EP 13 17 4860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2007 318833 A (MITSUBISHI ELECTRIC CORP) 6 December 2007 (2007-12-06) * the whole document * | 1-7 | INV. H02M1/00 H02M7/42 H02P9/00 H02P9/02 H02J3/38 |
| A | US 2011/270463 A1 (WEISS GEORGE [IL] ET AL) 3 November 2011 (2011-11-03) * the whole document * | 1-7 | |
| A | EP 2 546 971 A1 (TOSHIBA KK [JP]) 16 January 2013 (2013-01-16) * the whole document * | 1-7 | |
| A | QING-CHANG ZHONG ET AL: "Synchronverters: Inverters That Mimic Synchronous Generators", IEEE TRANSACTIONS ON INDUSTRIAL ELECTRONICS, IEEE SERVICE CENTER, PISCATAWAY, NJ, USA, vol. 58, no. 4, 1 April 2011 (2011-04-01), pages 1259-1267, XP011350328, ISSN: 0278-0046, DOI: 10.1109/TIE.2010.2048839 * the whole document * | 1-7 | |
| | | | TECHNICAL FIELDS SEARCHED (IPC) H02M H02P H02J |
| A | JP 2009 225599 A (KAWASAKI HEAVY IND LTD) 1 October 2009 (2009-10-01) * the whole document * | 1-7 | |
| A | WO 2012/098769 A1 (TOSHIBA KK [JP]; KIMURA MISAO [JP]; NORO YASUHIRO [JP]; HAYASHI HIDEKI) 26 July 2012 (2012-07-26) * the whole document * & EP 2 667 476 A1 (TOSHIBA KK [JP]) 27 November 2013 (2013-11-27) * the whole document * | 1-7 | |

-/--

The present search report has been drawn up for all claims

| Place of search | Date of completion of the search | Examiner |
|---|---|---|
| Munich | 15 January 2014 | Fiat, Cyrille |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 13 17 4860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUKO HIRASE ET AL: "A Grid-Connected Inverter with Virtual Synchronous Generator Model of Algebraic Type (translation)", ELECTRICAL ENGINEERING IN JAPAN, JOHN WILEY & SONS, INC, US, vol. 184, no. 4, 1 January 2013 (2013-01-01), pages 10-21, XP007922480, ISSN: 0424-7760 * the whole document * ----- | 1-7 | |

**TECHNICAL FIELDS SEARCHED (IPC)**

The present search report has been drawn up for all claims

| Place of search | Date of completion of the search | Examiner |
|---|---|---|
| Munich | 15 January 2014 | Fiat, Cyrille |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 17 4860

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2014

| Patent document cited in search report | Publication date | Patent family member(s) | Publication date |
|---|---|---|---|
| JP 2007318833 A | 06-12-2007 | JP 4846450 B2<br>JP 2007318833 A | 28-12-2011<br>06-12-2007 |
| US 2011270463 A1 | 03-11-2011 | CN 102257720 A<br>EP 2377238 A2<br>US 2011270463 A1<br>WO 2010055322 A2 | 23-11-2011<br>19-10-2011<br>03-11-2011<br>20-05-2010 |
| EP 2546971 A1 | 16-01-2013 | AU 2011225422 A1<br>CN 102792545 A<br>EP 2546971 A1<br>JP 2011193606 A<br>TW 201203575 A<br>US 2013241292 A1<br>WO 2011111511 A1 | 04-10-2012<br>21-11-2012<br>16-01-2013<br>29-09-2011<br>16-01-2012<br>19-09-2013<br>15-09-2011 |
| JP 2009225599 A | 01-10-2009 | NONE | |
| WO 2012098769 A1 | 26-07-2012 | AU 2011355888 A1<br>CN 103262377 A<br>EP 2667476 A1<br>TW 201244321 A<br>US 2013294119 A1<br>WO 2012098769 A1 | 25-07-2013<br>21-08-2013<br>27-11-2013<br>01-11-2012<br>07-11-2013<br>26-07-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007318833 A